# EUROPEAN PATENT SPECIFICATION

(11) **EP 2 675 143 B1**
(45) Date of publication and mention of the grant of the patent: **16.10.2019**
(21) Application number: 13171404.0
(22) Date of filing: 11.06.2013
(51) Int. Cl.: H04M 1/725, H04M 3/42, H04W 4/02, H04L 29/06, H04W 4/12, H04M 3/487, G08B 21/02

(54) **USER TERMINAL APPARATUS PROVIDING A NAVIGATION FUNCTION, SERVER AND CONTROLLING METHOD THEREOF**
BENUTZERENDGERÄTEVORRICHTUNG MIT NAVIGATIONFUNKTION, SERVER UND STEUERUNGSVERFAHREN DAFÜR
APPAREIL DE TERMINAL D'UTILISATEUR AVEC FONCTION DE NAVIGATION, SERVEUR ET SON PROCÉDÉ DE CONTRÔLE

(30) Priority: 11.06.2012 US 201261658095 P; 31.05.2013 KR 20130062298
(43) Date of publication of application: 18.12.2013
(73) Proprietor: Samsung Electronics Co., Ltd., Gyeonggi-do 443-742 (KR)
(72) Inventor: Jin, Young-kyu, Seoul (KR); Song, Sang-gon, Gyeonggi-do (KR); Rhee, Young-ho, Gyeonggi-do (KR); Chang, Il-ku, Gyeonggi-do (KR)
(74) Representative: Appleyard Lees IP LLP

(56) References cited:
- EP-A2- 1 274 056
- EP-A2- 2 028 448
- KR-A- 20070 075 435
- US-A1- 2009 005 072

## Description

### BACKGROUND

### 1. Field

Apparatuses and methods consistent with exemplary embodiments relate to a user terminal apparatus, a server, and a controlling method thereof, and more particularly, to a user terminal apparatus which may provide a navigation function, a server, and a controlling method thereof.

### 2. Description of the Related Art

Recently, mobile terminals which provide a navigation function such as a smart phone, a tablet, etc. have been widely used. In addition, the use of the navigation function in vehicles is increased, and also, users who walk or move by public transportation commonly use the navigation function.

The mobile terminals capable of providing the navigation function may transmit various types of messages to an external device and may provide services based on a sever when the mobile terminals are connected to Internet.

US 20090005072 A1 discloses user-applications provided by mobile devices. In one aspect, an email message is received at a mobile device from an email address and a representation of the email message is displayed on a graphical user interface. An input is received from a user indicating a selection of the email address. Contact information corresponding to a set of contacts is searched for a contact having a contact email address matching the email address. Contact information for the contact includes a geographic location for the contact. A display of a map is provided to the user. The display includes a graphical representation indicating the geographic location for the contact having a contact email address matching the email address.

EP 2028448 A3 discloses a terminal including a position-location module configured to receive position information of the terminal, and a controller configured to control an operation of the position-location module, and synchronize position relevant information obtained using the position information received by the position-location module with user schedule information.

EP 1274056 A3 discloses a system comprising means that is arranged to be user actuable for generating an e-tag and defining a location condition and/or an event condition and a beneficiary, means that is arranged to be responsive to said e-tag to alert said beneficiary of said e-tag at said defined location and/or when the event condition is fulfilled.

Accordingly, various methods to improve convenience of users who use the navigation function through the mobile terminals are required.

### SUMMARY

The invention is set out in the appended set of claims. The embodiments and/or examples of the following description which are not covered by the appended claims are considered as not being part of the present invention. One or more exemplary embodiments provide a user terminal apparatus which, when a specific place is set as a destination using a navigation function, notifies the destination setting to a user related to the specific place, a server, and a controlling method thereof.

According to an aspect of an exemplary embodiment, a user terminal apparatus which provides a navigation function includes a display, a user interface configured to receive a user command to set a specific place as a destination, and a controller configured to, when a user command is input, execute a path guidance function to reach the set destination and transmit a notification message regarding setting of the destination to at least one user related to the destination other than a user of the user terminal apparatus.

The user command may include at least one of a user command to select user identification information matched with address information pre-stored in the user terminal apparatus, a user command to set a destination on a navigation screen which is displayed in accordance with execution of the navigation function, and a user command to select address information linked to a message received by the user terminal apparatus.

The notification message may be transmitted to the at least one user related to the destination in a form of at least one of a short message service (SMS) message, a social network service (SNS) message, and an e-mail.

The apparatus may further include a communication unit configured to communicate with a server that manages information regarding the specific place set as the destination through the navigation function, and the controller, when the user command is input, may transmit identification information corresponding to the specific place set as the destination to the server, and control the display to display the information regarding the specific place set as the destination received from the server.

The controller may transmit location information representing a location of the user terminal apparatus to the server, and receive a message corresponding to the location information from an apparatus corresponding to the specific place set as the destination.

The information regarding the specific place set as the destination may include at least one of advertisement information, reservation service information, detailed information, and current status information of the specific place set as the destination.

According to an aspect of another exemplary embodiment, a server includes a communication unit configured to perform communication with a user terminal apparatus that provides a navigation function, and a controller configured to, when identification information corresponding to a place set as a destination through the navigation function is received from the user terminal apparatus, control the communication unit to search information regarding the place set as the destination and transmit the information to the user terminal apparatus.

The controller may search information regarding the place set as the destination from pre-stored information or receive information regarding the place set as the destination from an apparatus corresponding to the place set as the destination, and transmit the searched information to the user terminal apparatus.

The controller, when location information of the user terminal apparatus is received from the user terminal apparatus, may transmit at least one of the received location information and a message corresponding to the received location information to the place set as the destination.

The controller, when location information of the user terminal apparatus is received from the user terminal apparatus, may transmit the received location information to an apparatus corresponding to the place set as the destination, receive a message corresponding to the location information from the apparatus, and transmit the message to the user terminal apparatus.

According to an aspect of another exemplary embodiment, a method for controlling a user terminal apparatus which provides a navigation function includes receiving a user command to set a specific place as a destination, and when a user command is input, executing a path guidance function to reach the set destination and transmitting a notification message regarding setting of the destination to at least one user related to the destination other than a user of the user terminal apparatus.

The user command may include at least one of a user command to select user identification information matched with address information pre-stored in the user terminal apparatus, a user command to set a destination on a navigation screen which is displayed in accordance with execution of the navigation function, and a user command to select address information linked to a message received by the user terminal apparatus.

The notification message may be transmitted to a user matched with the specific place set as the destination in a form of at least one of an SMS message, an SNS message, and an e-mail.

The method may further include, when the user command is input, transmitting identification information corresponding to the specific place set as the destination to the server that manages information regarding the specific place set as the destination through the navigation function, receiving information regarding the specific place set as the destination from the server, and displaying the received information regarding the specific place set as the destination from the server.

The transmitting may include transmitting location information representing a location of the user terminal apparatus to the server, and the receiving may include receiving a message corresponding to the location information from an apparatus corresponding to the specific place set as the destination through the server.

The information regarding the specific place set as the destination may include at least one of advertisement information, reservation service information, detailed information, and current status information of the specific place set as the destination.

According to an aspect of an exemplary embodiment, a method for controlling a server which performs communication with a user terminal apparatus that provides a navigation function includes receiving identification information corresponding to a place set as a destination through the navigation function, and when the identification information is received, searching information regarding the place set as the destination and transmitting the information to the user terminal apparatus.

The transmitting may include searching information regarding the place set as the destination from pre-stored information or receiving information regarding the place set as the destination from an apparatus corresponding to the place set as the destination, and transmitting the information to the user terminal apparatus.

The transmitting may include, when location information of the user terminal apparatus is received from the user terminal apparatus, transmitting at least one of the received location information and a message corresponding to the received location information to an apparatus corresponding to the place set as the destination.

The transmitting may include, when location information of the user terminal apparatus is received from the user terminal apparatus, transmitting the received location information to an apparatus corresponding to the place set as the destination, receiving a message corresponding to the location information from the apparatus, and transmitting the message to the user terminal apparatus.

According to an aspect of an exemplary embodiment, a system for providing a navigation function includes a first user terminal configured to perform the navigation function based on an input command of setting a destination and a second user terminal corresponding to the destination and configured to communicatively couple to the first user terminal, wherein the second user terminal is configured to transmit information regarding the destination to the first user terminal in response to the input command of setting the destination.

The system may further include a server configured to communicate between the first user terminal and the second user terminal and relay transmission and reception of information therebetween, wherein the second user terminal registers the information regarding the destination to the server.

According to an aspect of an exemplary embodiment, provided is a non-transitory computer readable medium which stores a program for executing the method for controlling a user terminal apparatus which provides a navigation function.

According to an aspect of an exemplary embodiment, provided is a non-transitory computer readable medium which stores a program for executing the method for controlling a server which performs communication with a user terminal apparatus that provides a navigation function.

### BRIEF DESCRIPTION OF THE DRAWINGS

The above and/or other aspects of the present inventive concept will be more apparent by describing certain exemplary embodiments of the present inventive concept with reference to the accompanying drawings, in which:
FIG. 1 illustrates schematic views of a system which provides a navigation service according to exemplary embodiments;
FIG. 2 illustrates block diagrams of a configuration of a user terminal apparatus according to exemplary embodiments;
FIGS. 3 to 7 are views illustrating examples of screens provided to a user according to various exemplary embodiments;
FIG. 8 illustrates block diagrams of a configuration of a server according to exemplary embodiments;
FIG. 9 is a view for explaining information stored in a server according to an exemplary embodiment;
FIGS. 10 to 14 are views illustrating examples of screens provided to a user according to various exemplary embodiments;
FIG. 15 is a signal flow view illustrating an operation a system which provides a navigation service according to an exemplary embodiment;
FIG. 16 is a flowchart illustrating a method for controlling a user terminal apparatus according to an exemplary embodiment; and
FIG. 17 is a flowchart illustrating a method for controlling a server according to an exemplary embodiment.

### DETAILED DESCRIPTION

It should be observed the method steps and system components have been represented by conventional symbols in the figure, showing only specific details which are relevant for an understanding of the present disclosure. Further, details may be readily apparent to person ordinarily skilled in the art may not have been disclosed. In the present disclosure, relational terms such as first and second, and the like, may be used to distinguish one entity from another entity, without necessarily implying any actual relationship or order between such entities.

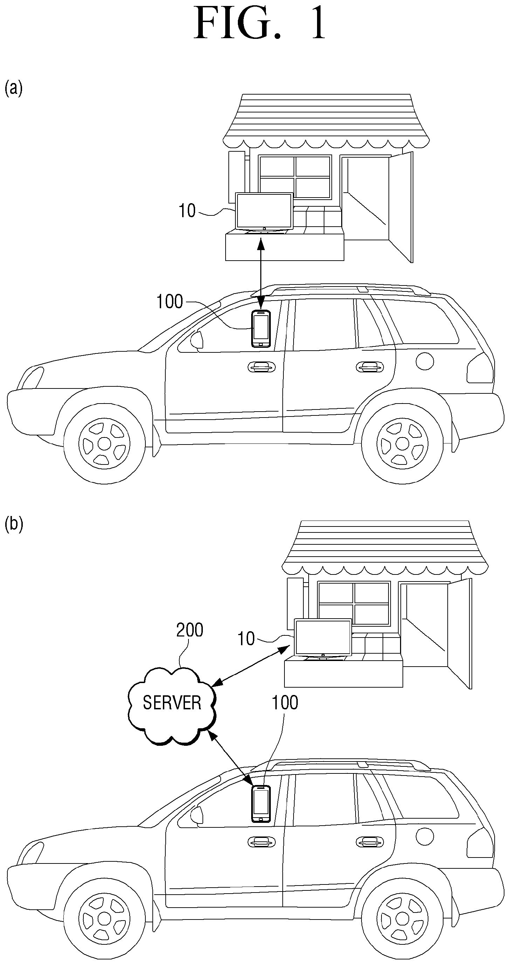

FIG. 1 illustrates schematic views of a system which provides a navigation service according to exemplary embodiments.

In an exemplary embodiment, the system may include a user terminal apparatus 100 and an external device 10 as illustrated in (a) of FIG. 1. Alternatively, the system may be include the user terminal apparatus 100, a server 200, and the external device 10 as illustrated in (b) of FIG. 1.

The user terminal apparatus 100 may be an apparatus which is capable of providing a navigation function to a user. For example, the user terminal apparatus 100 may be realized as a general navigation device or a mobile phone, a tablet, a notebook personal computer (PC), etc., which stores an application program for providing a navigation service. Accordingly, the user terminal apparatus 100 may provide a general navigation function, that is, the function of providing path guidance to a location which is set as a destination by the user.

In addition, the user terminal apparatus 100 may transmit a notification message to other users related to the destination. Here, the notification message may be a message indicating that the user terminal apparatus 100 sets a place where another user is located as a destination.

For example, when a store or a museum is set as a destination, the user terminal apparatus 100 may transmit a notification message to an owner of the store or the museum. In addition, when a residential house is set as a destination, the user terminal apparatus 100 may transmit a notification message to a person who resides in the house.

Meanwhile, a person located in the destination set by the user terminal apparatus 100 may receive a notification message transmitted from the user terminal apparatus 100 through the external device 10.

In this case, the external device 10 may be an electronic device in various forms such as a PC, a television (TV), a mobile phone, a tablet, etc. For example, when the external device 10 is in a place such as a shop, a museum, or a house, the external device 10 may be a PC or a TV installed in the corresponding place, or a mobile phone or a tablet of a person who runs the store or the museum or a person who resides in the house.

Accordingly, a person located in the place set as a destination by the user terminal apparatus 100 may recognize that a user of the user terminal apparatus 100 will visit the location where the person is located.

In addition, the user terminal apparatus 100 may receive various information related to the destination set by a user and provide the information to the user. To this end, the user terminal apparatus 100 may communicate with the server 200.

For example, when a store is set as a destination, the user terminal apparatus 100 may receive and display information regarding a promotion or an event which is held in the shop, or when a museum is set as a destination, the user terminal apparatus 100 may receive and display information regarding operation hours of the museum. In addition, when a residential house is set as a destination, the user terminal apparatus 100 may receive and display information regarding a specific way to find the house.

However, this is only an example, and the user terminal apparatus 100 may receive other various information regarding the destination set by the user terminal apparatus 100 and provide the information to the user.

The server 200 may perform communication with the user terminal apparatus 100 and the external device 10 and relay transmission and reception of various information between the user terminal apparatus 100 and the external device 10.

For example, the server 200 may store and manage information regarding a place having each external device 10, which is received from the each external device 10 through communication between the external device 10 and the server 200.

The external device 10 may log on to the server 200 using authentication information (such as identification (ID) and password), and transmit the information regarding a place having the external device 10 to the server 200. In this case, the server 200 may store and manage information received from a manager device of each external device 10.

When information regarding the destination set by the user terminal apparatus 100 is received from the user terminal apparatus 100, the server 200 may transmit information regarding the place corresponding to the destination set by the user terminal apparatus 100 from among pre-stored information to the user terminal apparatus 100. For example, when store A is set as a destination in the user terminal apparatus 100, the server 200 may transmit information regarding store A from among pre-stored information to the user terminal apparatus 100.

In addition, the server 200 may receive information regarding the destination set by the user terminal apparatus 100 from the external device 10 located in the destination and transmit the information to the user terminal apparatus 100. For example, when store A is set as a destination by the user terminal apparatus 100, the server 200 may receive information regarding store A from the external device 10 located in store A and transmit the information to the user terminal apparatus 100.

As such, the user terminal apparatus 100 may provide not only a navigation function but also various information regarding a destination set by a user. Accordingly, users may receive not only path guidance to a desired destination but also other useful information regarding the destination, and thus, user convenience may be enhanced.

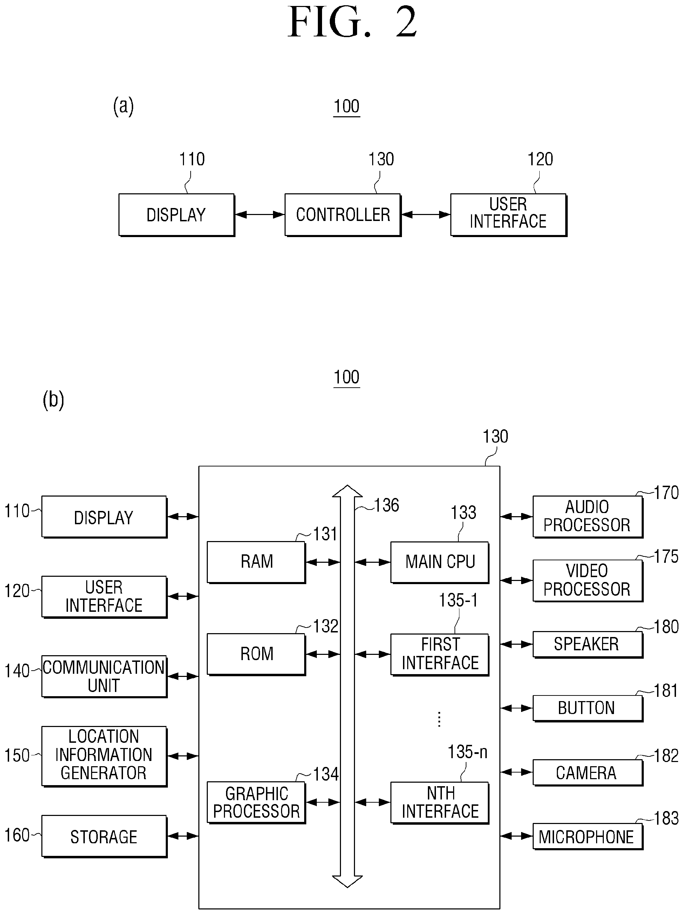

FIG. 2 illustrates block diagrams of a configuration of a user terminal apparatus according to exemplary embodiments. Specifically, (a) of FIG. 2 is a block diagram illustrating a basic configuration of the user terminal apparatus 100 according to an exemplary embodiment, and (b) of FIG. 2 is a block diagram illustrating a detailed configuration of the user terminal apparatus 100 according to another exemplary embodiment.

In (a) of FIG. 2, the user terminal apparatus 100 which provides a navigation function comprises a display 110, a user interface 120, and a controller 130.

The display 110 displays various screens. In particular, the display 110 may display various screens to provide a user with a navigation function.

For example, the display 110 may display a current location of the user terminal apparatus 100 on a navigation screen (for example, a map screen), and when a destination is set by a user, may display a path, a required travel time, an estimated arrival time to the destination, etc. on the navigation screen.

The user interface 120 receives various user commands. In particular, the user interface 120 may receive various user commands regarding the navigation function. For example, the user interface 120 may receive a user command to set a specific place as a destination.

Herein, the user command to set a specific place as a destination may include at least one of a user command to select user identification information matching with address information pre-stored in the user terminal apparatus and a user command to set a destination displayed on the navigation screen according to execution of the navigation function. This will be explained in detail later.

Meanwhile, the user interface 120 may be in the form of a touch screen to receive various user commands regarding the navigation function through touch manipulation. In an exemplary embodiment, the user interface 120 in the form of the touch screen may be integrally provided with the display 110.

The controller 130 controls overall operations of the user terminal apparatus 100. The controller 130 may include a microcomputer (micom) (or a micom and a central processing unit (CPU)) and a random access memory (RAM) and a read only memory (ROM) for operating the user terminal apparatus 100. In this case, modules of the controller 130 may be in the form of a system on chip (SoC).

The controller 130 may control to provide a user with a navigation function. Specifically, when a user command to execute the navigation function is input, the controller 130 may provide a user with the navigation function by executing an application program (hereinafter, "navigation application program") for providing the navigation function.

Herein, a user command to execute the navigation function may be input in various ways. For example, a user may execute the navigation function by selecting an icon to execute the navigation function or by inputting a command to set a specific place as a destination.

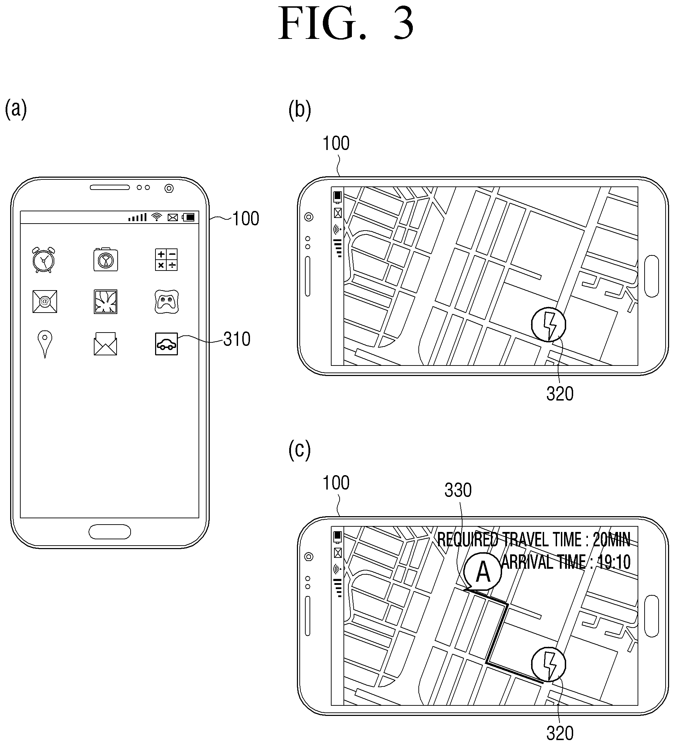

In an exemplary embodiment, in the former case, when an icon 310 to execute the navigation application program is selected as illustrated in (a) of FIG. 3, the controller 130 may display a navigation screen on the display 110 by executing the navigation function. In this case, the controller 130 may display a current location 320 of the user terminal apparatus 100 on the navigation screen.

When a user command to set a destination is input on the navigation screen which is displayed according to execution of the navigation function, the controller 130 may set a place as a destination according to the user command. For example, when location A is set as a destination as illustrated in (c) of FIG. 3, the controller 130 may display a path, a required travel time, an arrival time, etc. with respect to the location A which is set as the destination on the navigation screen. A user may set the destination by inputting a name, an address, a phone number, etc. of a desired place on the navigation screen.

Meanwhile, in the latter case, the user command to set a specific place as a destination may be input in various ways. For example, a user may set a specific place as a destination by selecting user identification information. Herein, the user identification information may be various user information included in various messages such as a social network service (SNS) message, a short message service (SMS) message, an e-mail, etc., or lists such as a call history list or a phone book list.

Specifically, the user command to set a specific place as a destination by selecting user identification information may be input by selecting a name, an image, etc. of each user included in each list. The user command may also be input by selecting a specific item, such as a destination setting item, while the user information is displayed.

Accordingly, when user identification information is selected, the controller 130 may display a navigation screen on the display 110 by executing a navigation function and set a destination on the navigation screen using address information matching with the selected user identification information. To this end, the user terminal apparatus 100 may match address information to each user identification information and store the information in advance.

Specifically, the controller 130 may determine address information matched with the user identification information selected by the user from among pre-stored address information for each user identification information and set a destination using the determined address information.

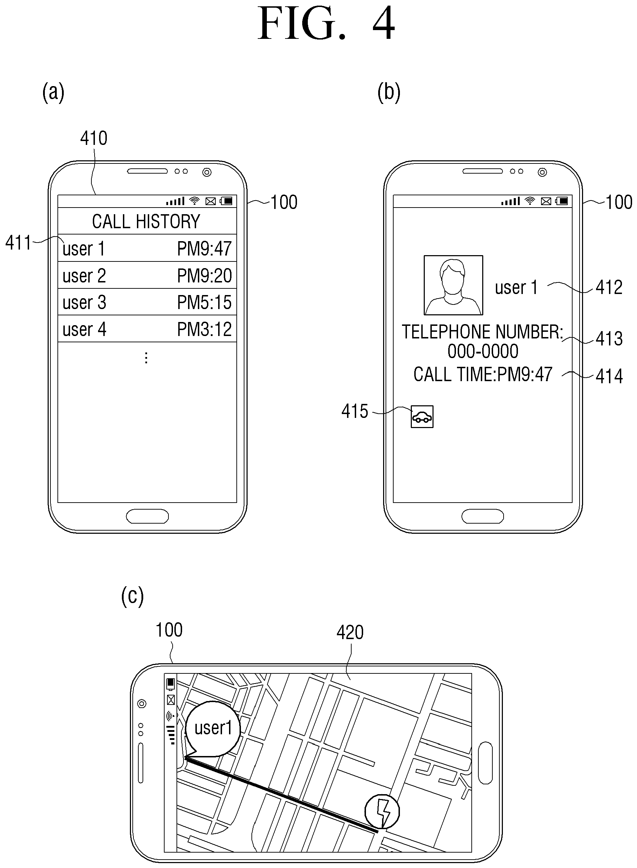

For example, in a case where a call history list 410 is displayed as illustrated in (a) of FIG. 4, when one user is selected from the call history list, the controller 130 may display user information of the selected user and a destination setting item to set the pre-stored address of the selected user as a destination. For example, as illustrated in (b) of FIG. 4, when a user 1 411 is selected from the call history list, a name 412, a phone number 413, and a call time 414 of the user 1 and a destination setting item 415 may be displayed.

When the destination setting item 415 is selected, the controller 130 may determine address information matched with the selected destination setting item 415 of the user 1 411 and set a destination using the determined address information. Herein, the address information matched with the destination setting item 415 may be pre-stored address information regarding the selected user in the call history list. That is, when the destination setting item 415 is selected, as illustrated in (c) of FIG. 4, address information of the user 1, which is information matched with the user 1 and pre-stored, may be determined and a navigation screen 420 where a destination is set using the address information of the user 1 may be displayed.

Meanwhile, the user command to set a specific place as a destination may include a command to select address information linked to a message (for example, an SNS message, an SMS message, an e-mail, etc.) received from the user terminal apparatus 100. That is, when address information linked to each message is selected, the controller 130 may set a destination using the selected address information.

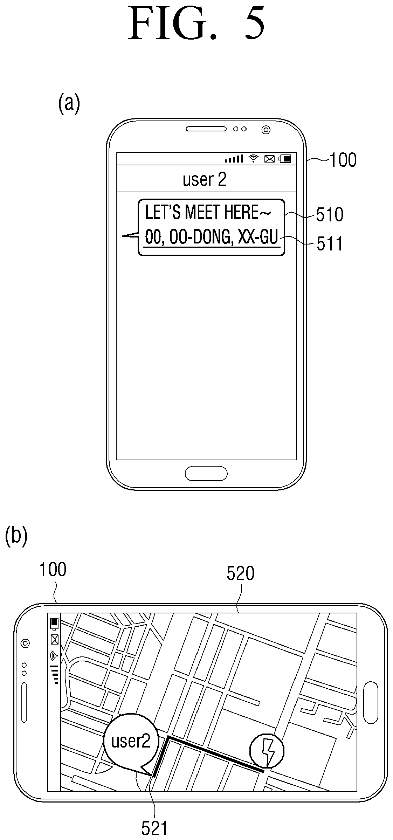

For example, in a case where address information 511 is included in an SMS message 510 from a user 2 as illustrated in (a) of FIG. 5, when the address information 511 included in the SMS message is selected, the controller 130 may display a navigation screen 520 by setting a place corresponding to the selected address information 511 as a destination 521 as illustrated in (b) of FIG. 5.

As such, when a user command to set a specific place as a destination is input, the controller 130 may execute a path guidance function for the set destination. In this case, the controller 130 may control to transmit a notification message regarding setting of the destination to other users related to the destination. That is, the controller 130 may transmit a notification message while executing the path guidance function.

Herein, the notification message is a message indicating that the corresponding place is set as a destination in the user terminal apparatus 100 and may be transmitted to a user who is matched with the place set as the destination in the form of at least one of, for example, an SMS message, an SNS message and an e-mail.

To this end, when a destination is set, the controller 130 determines a matched user using address information of the destination. Specifically, the controller 130 may determine a user who corresponds to the address information of the destination using pre-stored address information which is matched with each user.

Next, the controller 130 may search a phone number, SNS account information, an e-mail address, etc. of the determined matched user using a pre-stored phone number, SNS account information, e-mail address, etc. which are matched to each user and transmit a notification message to the determined matched user using the searched information.

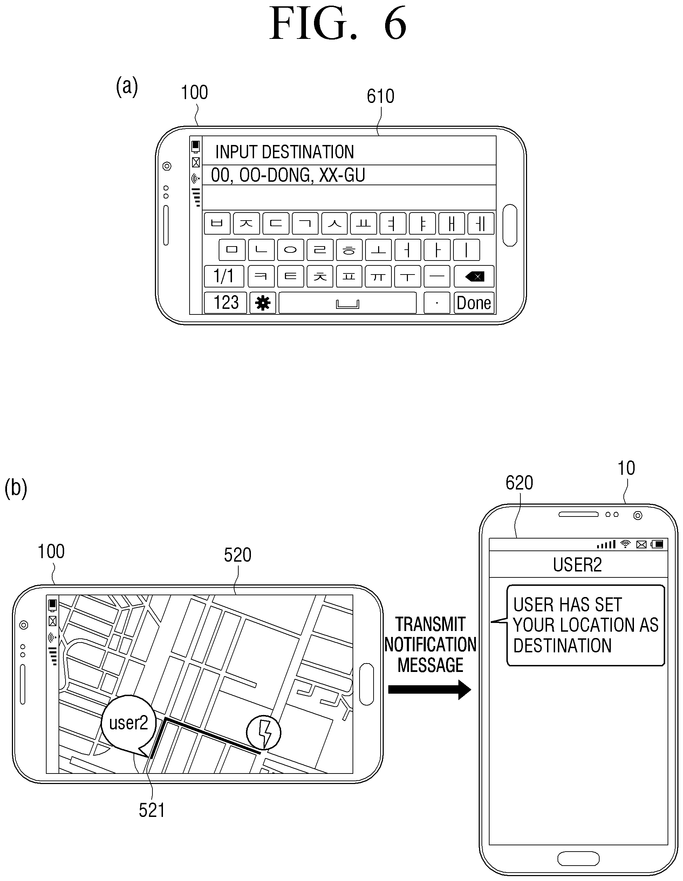

For example, in a case where a user sets a destination by inputting an address on a navigation screen 610 as illustrated in (a) of FIG. 6, the controller 130 determines a user who is matched with the address input on the navigation screen using pre-stored address information for each user. Next, the controller 130 may search a phone number matched with the determined user from among pre-stored phone numbers for each user and transmit a notification message in, for example, the SMS form using the searched telephone number.

For example, as illustrated in (b) of FIG. 6, if it is determined that the user 2 is matched with the address input on the navigation screen 610, a notification message 620 in the SMS form may be transmitted to the terminal apparatus 10 of the user 2 using the telephone number of the user 2.

Meanwhile, in the exemplary embodiment of FIG. 6, an address is input directly by the user of the user terminal apparatus 100. However, an address may be input in various ways. For example, when a name and a telephone number of a specific user are input, the controller 130 may determine address information which is matched with the input name and telephone number of the specific user from among pre-stored information and set a destination using the determined address information.

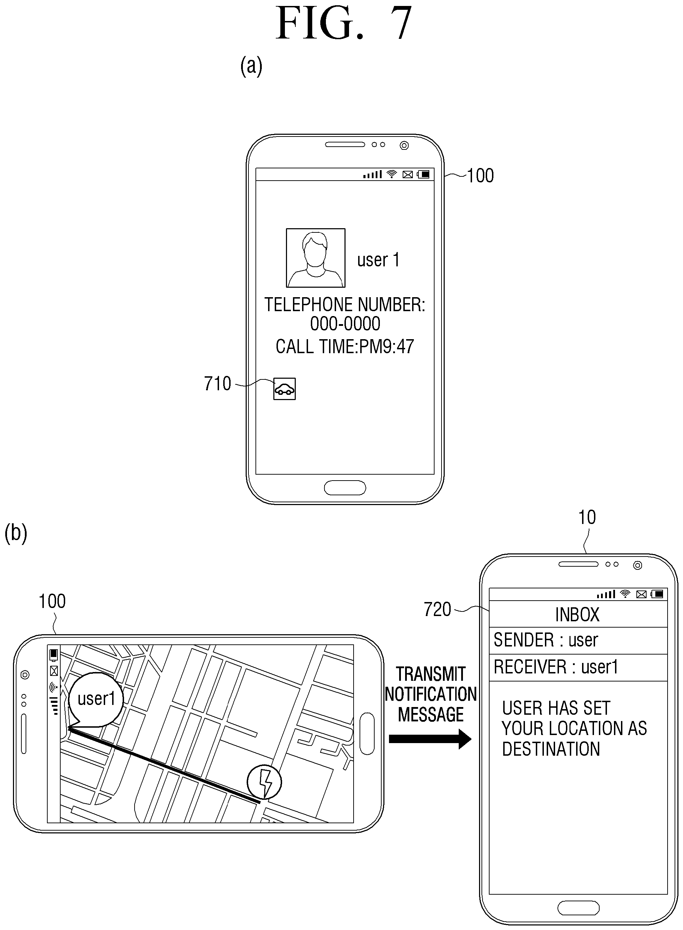

In addition, as illustrated in (a) of FIG. 7, in a case where a destination is set by selecting a destination setting item 710, the controller 130 may determine a user related to the destination using user information displayed together with the destination setting item 710 and transmit a notification message in the form of, for example, an e-mail by searching a pre-stored e-mail address of the determined user. That is, as illustrated in (b) of FIG. 7, when it is determined that a user corresponding to the destination setting item 710 is a user 1, a notification message 720 may be transmitted using an e-mail address of the user 1. The user 1 may check the notification message 720 by connecting to the e-mail of the user 1 through his or her terminal apparatus 10.

Meanwhile, a transmission type of a notification message may be set and changed by a user. That is, the controller 130 may receive and store an input from a user regarding how to transmit a notification message, e.g., whether the message will be transmitted in an SNS message, an SMS message, or an e-mail in advance, and determine the transmission type of a notification message using the input. However, this is only an example. For example, when a user command to set a destination is input, the controller 130 may display a list of the transmission type of a notification message and transmit a notification message in the transmission type selected from the list. For example, when an SMS message is selected from the list, the controller 130 may transmit a notification message in the form of an SMS message.

Meanwhile, as illustrated in (b) of FIG. 2, the user terminal apparatus 100 may further comprise a communication unit 140, a location information generator 150, a storage 160, an audio processor 170, a video processor 175, a speaker 180, a button 181, a camera 182, and microphone 183, in addition to the display 110, the user interface 120, and the controller 130, and the above components may be controlled by the controller 130. Meanwhile, a repetitive description of the components which are already described with reference to (a) of FIG. 2 will be omitted.

The communication unit 140 communicates with the server 200 in FIG. 1. For example, the communication unit 140 may perform communication with the server 200 using a mobile communication network such as the third generation (3G), the fourth generation (4G), etc. or through a wireless communication protocol such as WiFi. Herein, the server 200 may be a server which manages information regarding places which can be set as a destination through the navigation function.

Meanwhile, when a user command to set a specific place as a destination is input, the controller 130 may transmit identification information corresponding to the place set as the destination to the server 200. To this end, the user terminal apparatus 100 may match identification information (for example, an address-based identification) for each place and store the information. That is, the user terminal apparatus 100 may match location information (for example, a name, an address, a phone number, and global positioning system (GPS) location information) of each place with identification information thereof and store the information.

Accordingly, the controller 130 may determine identification information matched with the place set as the destination from among identification information matched with each place and control the communication unit 140 to transmit the identification information to the server 200.

In addition, the controller 130 may control the display 110 to receive and display information regarding the place set as the destination from the server 200.

Herein, the information regarding the place set as the destination may include at least one of, for example, advertisement information, reservation information, detailed information, and current status information regarding the place set as the destination.

For example, the advertisement information regarding the place may include a name of the place, a name of an operator (or a resident), business hours, names of products available for purchase, a type, a price, an available coupon, an effective period for using a coupon, a promotion (or an event) held in the place, a promotion period, a specific way to find the place, etc., and the reservation information regarding the place may include business hours of the place, an available time for reservation, a number of seats available for reservation, a specific way to find the place, etc.

In addition, for example, the detailed information regarding the place may include a name of the place, a name of an operator, business hours, a specific way to find the place, etc., and the current status information regarding the place may include information regarding the number of persons which can be accommodated in the place, a number, a type and stock of products that can be purchased.

Accordingly, users may receive not only a path guidance service by setting a desired destination but also various information regarding the destination.

Meanwhile, in the above exemplary embodiment, in order to receive various information regarding the place set as the destination from the server 200, the user terminal apparatus 100 transmits identification information corresponding to the place set as the destination to the server 200, but this is only an example. That is, the controller 130 may transmit information regarding the destination rather than identification information matched with the place set as the destination to the server 200.

Specifically, the controller 130 may transmit location information indicating the location of the place set as the destination to the server 200 and receive information regarding the place set as the destination from the server 200. Herein, the location information may include a name, an address, a telephone number, a GPS location information, etc. of the place set as the destination.

In addition, the controller 130 may transmit a message input through the user interface unit 120 to the server 200. For example, when a user command to input a message is input, the controller 130 may receive the message from a user by displaying a virtual keyboard on the screen and transmit the input message to the server 200. In this case, the server 200 may transmit the message received from the user terminal apparatus 100 to the external device 10 in the place set as the destination.

The location information generator 150 generates location information indicating a location of the user terminal apparatus 100. Specifically, the location information generator 150 may search the location of the user terminal apparatus 100 using a global positioning system (GPS) module (not shown). For example, the GPS module (not shown) may receive a signal transmitted from a plurality of GPS satellites and calculate a distance between the satellites and the user terminal apparatus 100 using a time difference between a transmission time and a reception time of the signal. In addition, the current location of the user terminal apparatus 100 may be calculated using a calculation method such as trilateration in comprehensive consideration of the calculated distance between each of the plurality of satellites and locations of the satellites.

Accordingly, the controller 130 may provide a navigation function to a user by using the location information generated by the location information generator 150. For example, the controller 130 may display the current location of the user terminal apparatus 100 on the navigation screen using the location information generated by the location information generator 150 when the navigation function is executed. In addition, the controller 130 may transmit the location information generated by the location information generator 150 to the server 200.

The storage 160 stores an operating system (O/S), various application programs and various data to drive the user terminal apparatus 100. In particular, the storage 160 may store an application which may provide a navigation service and data regarding various maps. Accordingly, the controller 130 may provide the navigation service to a user by executing the application program which can provide the navigation service according to a user command.

In addition, the storage 160 may match an address, a telephone number, an e-mail, etc. for each user and store the same, and may match address information for each user identification information and store the same.

Further, the storage 160 may match location information of places which can be set as a destination through the navigation function with identification information and store the same. Accordingly, when a specific place is set as a destination, the controller 130 may determine identification information matched with the set destination.

The audio processor 170 may process audio data. The audio processor 170 may perform various processing including decoding, amplification, and noise filtering with respect to audio data.

The video processor 175 may process video data, for example, data related to a map. For example, the video processor 175 may perform various image processing including decoding, scaling, noise filtering, frame rate conversion, and resolution conversion with respect to video data.

The speaker 180 is a component which outputs not only various audio data processed by the audio processor 170 but also various sounds such as, for example, alarm sounds or voice messages. In an exemplary embodiment, when a specific place is set as a destination according to the navigation function, the speaker 180 may output a voice guidance to guide a path to the place set as the destination.

The button 181 may include various types of buttons such as a mechanical button, a wheel, etc. formed on a certain area of an outer surface of a body of the user terminal apparatus 100, such as a front, a side, or a rear portion of the user terminal apparatus 100. For example, a button for turning on/off power of the user terminal apparatus 100 may be provided.

The camera 182 is a component to photograph a still image or a moving image. The camera 182 may include a plurality of cameras such as a front camera and a rear camera.

The microphone 183 is a component to receive and convert a user voice or other sounds into audio data. The controller 130 may use a user voice which is input through the microphone 183 during a phone call or may convert the user voice into audio data and store the same in the storage 160.

In addition, the user terminal apparatus 100 may further comprise various external input ports to connect to various external terminal devices such as a headset.

Meanwhile, the controller 130 comprises a RAM 131, a ROM 132, a main CPU 133, a graphic processor 134, first to nth interface 135-1 ∼ 135-n, and a bus 136.

The RAM 131, the ROM 132, the main CPU 133, the graphic processor 134, and the first to nth interface 135-1 ∼ 135-n may be connected to one another through the bus 136.

The first to nth interface 135-1 ∼ 135-n are connected to the above-described components. One of the interface may be a network interface which is connected to an external apparatus via a network.

The main CPU 133 accesses the storage 160 and performs booting using an O/S stored in the storage 160. In addition, the main CPU 133 performs various operations using various programs, contents, and data stored in the storage 160.

The ROM 132 stores a set of commands for system booting. If a turn-on command is input and power is supplied, the main CPU 133 copies an O/S stored in the storage 160 in the RAM 131 according to a command stored in the ROM 132 and executes the O/S to boot the system. Once the system booting is completed, the main CPU 133 copies various application programs (that is, application programs) stored in the storage 160 in the RAM 131 and performs various operations by executing the application programs copied in the RAM 131.

The graphic processor 134 generates a screen including various objects such as an icon, an image, a text, etc. using an operator (not shown) and a renderer (not shown). The operator (not shown) calculates property values such as coordinates, a shape, a size, a color, etc. of a screen where each object is displayed according to a layout of the screen. The renderer (not shown) generates a screen of various layouts including an object based on the property values calculated by the operator. The screen generated by the renderer (not shown) is displayed within a display area of the display 110.

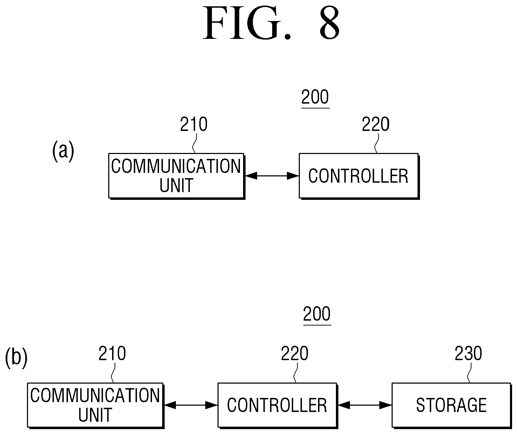

FIG. 8 illustrates block diagrams of a configuration of a server according to exemplary embodiments. Specifically, (a) of FIG. 8 is a block diagram illustrating a basic configuration of the server 200 according to an exemplary embodiment, and (b) of FIG. 8 is a block diagram illustrating a detailed configuration of the server 200 according to another exemplary embodiment.

In (a) of FIG. 8, the server 200 comprises a communication unit 210 and a controller 220.

The communication unit 210 performs communication with the user terminal apparatus 100 of FIG. 1 which provides a navigation function. Accordingly, the communication unit 210 may receive identification information matched with the place set as the destination from the user terminal apparatus 100 or location information of the place which is set as the destination from the user terminal apparatus 100, and transmit information regarding the place set as the destination to the user terminal apparatus 100.

In addition, the communication unit 210 performs communication with an external device 10 of FIG. 1 of the place which is set as the destination. Accordingly, the communication unit 210 may receive, from the external device 10, information regarding the place having the external device 10.

The controller 220 controls overall operations of the server 200. The controller 220 may include a micom (or a micom and a central processing unit (CPU)) and a random access memory (RAM) and a read only memory (ROM) for operations of the server 200. In this case, modules of the controller 220 may be in the form of system on chip (SoC).

In particular, the controller 220 may receive information regarding the place having the external device 10 from the external device 10 and store and manage the information. In this case, the controller 220 may store information which is received from each external device 10.

Specifically, the external device 10 may log on to the server 200 by inputting authentication information through a web page or an application program provided by the server 200, receive information regarding the place having the external device 10 from a user of the external device 10, and transmit the information to the server 200.

Herein, the information regarding the place having the external device 10 may include at least one of, for example, advertisement information, reservation information regarding the place, detailed information, and current status information regarding the place. A detailed description thereof has already been explained above with respect to FIG. 2 and thus is omitted.

Meanwhile, the controller 220 may match each place with identification of the external device 10 corresponding thereto and store the information. Specifically, the controller 220 may match location information, for example, a name, an address, a phone number, and GPS location information of each place with identification information of the external device 10 and store the information, or may match identification information, i.e., address-based identification, corresponding to location information of each place with identification information of the external device 10. Herein, the identification information of the external device 10 may be, for example, a user log-in ID of the external device 10. The user log-in ID may be an ID which is generated through a predetermined authentication process initiated when the user proceeds to subscribe to the sever 200. Accordingly, the controller 220 may recognize each external device 10 through the user log-in ID.

In addition, the controller 220 may update information regarding a place having the pre-stored external device 10. That is, when new information is input from the external device 10, the controller 220 may update the existing information and store the updated information.

Meanwhile, when identification information corresponding to the place which is set as a destination through the navigation function is received from the user terminal apparatus 100, the controller 220 may control the communication unit 210 to search information regarding the place set as the destination and transmit the information to the user terminal apparatus 100.

Specifically, the controller 220 may compare identification information received from the user terminal apparatus 100 with identification information matched with location information of each place and determine the place which is set as the destination in the user terminal apparatus 100.

In addition, the controller 220 may search information regarding the place set as the destination from pre-stored information and transmit the information to the user terminal apparatus 100.

Specifically, the controller 220 may determine the external device 10 in the place which is set as the destination using the log-in ID of the external device 10 which is matched with location information of the place, search information regarding the place which is received and stored from the corresponding external device 10, and transmit the information to the user terminal apparatus 100. For example, when it is determined that the place set as a destination in the user terminal apparatus 100 is store A, the controller 220 may search information received from the external device 10 in store A and transmit the information to the user terminal apparatus 100.

In addition, the controller 220 may receive information regarding the place set as a destination from an apparatus, e.g., the external device 10, corresponding to the place set as the destination and transmit the information to the user terminal apparatus 100. That is, the controller 220 may request the external device 10 in the place set as the destination to send the information, and when the information regarding the corresponding place from the external device 10 is received, the controller 220 may transmit the information to the user terminal apparatus 100. The above operation is performed in a case when a log-in ID of the external device 10 matched with the place set as the destination exists, but no pre-stored information regarding the place exists in the external device 10, or in a case where a time interval between a time when the information regarding the place was last updated and a current time exceeds a predetermined time period.

Meanwhile, in the above exemplary embodiment, the identification information received from the user terminal apparatus 100 is used, but this is only an example. That is, when information regarding the destination from the user terminal apparatus 100 is received, the controller 220 may determine the place which is set as the destination from the user terminal apparatus 100 using the information.

Specifically, when location information of the place set as the destination is received from the user terminal apparatus 100, the controller may determine the place set as the destination from the user terminal apparatus 100 using the information. Herein, the location information may include a name, an address, a telephone number, a GPS location information, etc. of the place set as the destination. Accordingly, the controller 220 may determine the destination set in the user terminal apparatus 100 using the location information received from the user terminal apparatus 100, search information regarding the place set as the destination, and transmit the information to the user terminal apparatus 100.

Meanwhile, the controller 220 may transmit a notification message regarding the setting of the destination to an apparatus corresponding to the place set as the destination. That is, the controller 220 may transmit information regarding the place set as the destination to the user terminal apparatus 100, while transmitting a notification message to the external device 10 in the place set as the destination. Herein, the notification message may be a message indicating that the place having the external apparatus 10 is set as a destination in the user terminal apparatus 100.

In this case, the controller 220 may transmit user information of the user terminal apparatus 100 to the external device 10 along with the notification message. That is, the controller 220 may search user information which is input when the user terminal apparatus 100 proceeds to subscribe to the server 200 and transmit the information to the external device 10.

Meanwhile, the external device 10 may display a notification message received from the server 200. In an exemplary embodiment, the external device 10 may display a notification message received from the server 200 or display the notification message specified based on user information received from the server 200. For example, in the former case, the message displayed in the external device 10 may be "a guest has set the corresponding place as a destination" and, in the latter case, the message displayed in the external device 10 may be "OOO (user name) has set the corresponding place as a destination".

Meanwhile, when location information of the user terminal apparatus 100 is received from the user terminal apparatus 100, the controller 220 may transmit at least one of the received location information and a message corresponding to the received location information to the external device 10 corresponding to the place which is set as the destination. That is, the controller 220 may transmit at least one of the location information of the user terminal apparatus 100 and a message corresponding to the location information to the external device 10 in the place set as the destination to the user terminal apparatus 100.

When the location information of the user terminal apparatus 100, such as a name, an address, a telephone number, a GPS location information, etc. of the user terminal apparatus 100 is received from the user terminal apparatus 100, the controller 220 may transmit the location information to the external device 10.

In addition, the controller 220 may calculate a distance, a required travel time, an arrival time, etc. according to the current location and the place set as the destination by using the location information of the user terminal apparatus 100 and transmit a message according to the calculated information to the external device 10.

In this case, the controller 220 may transmit different messages to the external device 10 according to the calculated information. For example, the controller 220 may divide a required time to reach the destination into a plurality of levels, and transmit a message corresponding to each level of the calculated required travel time to the external device 10. For example, when a calculated required time belongs to a first level, the controller 220 may transmit, to the external device 10, a message representing a distance between the user terminal apparatus 100 and the destination, and when the calculated required travel time corresponds to a second level, the controller 220 may transmit, to the external device 10, a message representing a required time for the user terminal apparatus 100 to reach the destination. However, this is only an example, and a content included in the message may vary depending on circumstances.

Meanwhile, the external device 10 may display the location information of the user terminal apparatus 100, which is received from the server 200, or the message received from the server 200.

In addition, when the location information of the user terminal apparatus 100 is received from the user terminal apparatus 100, the controller 220 may transmit the received location information to an apparatus, e.g., the external device 10, corresponding to the place set as the destination and receive a message corresponding to the location information from the apparatus.

That is, the controller 220 may transmit the location information received from the user terminal apparatus 100 to the external device 10 in the place set as the destination and display the location information received from the external device 10. Accordingly, a user of the external device 10 may determine the location of the user terminal apparatus 100 and transmit a corresponding message to the user terminal apparatus 100 through the server 200 by inputting the message to the external device 10. For example, if it is determined that a user may not arrive to a place having the external device 10 within the business hours of the place in consideration of the current location of the user terminal apparatus 100, a user of the external device 10 may transmit a message, "the business will be closed shortly" to the user terminal apparatus 100.

However, this is only an example, and a user of the external device 10 may transmit a message directly to the user terminal apparatus 100 without using the server 200. For example, in a case where a user of the user terminal apparatus 100 opens his or her user information (for example, a mobile phone number of the user terminal apparatus 100 or a mobile phone number of another terminal apparatus which belongs to the user) to the public when subscribing to the server 200, a user of the external device 10 may check the user information of the user terminal apparatus 100 by logging on to the server 200. Accordingly, the user of the external device 10 may transmit an SMS message, etc. to the user of the user terminal apparatus 100 by using the shared user information.

Meanwhile, (b) of FIG. 8 is a block diagram illustrating a detailed configuration of the server 200. According to (b) of FIG. 8, the server 200 may further comprise a storage 230 in addition to the communication unit 210 and the controller 220, and may be controlled by the controller 220.

The storage 230 stores various data to drive the server 200.

In particular, the storage 230 may store various log-in IDs and confidential information to log on to the server 200. Accordingly, the controller 220 may perform an authentication process according to a log-in ID and a password, e.g., a pin number, received from the user terminal apparatus 100 and a manager apparatus.

In addition, the storage 230 may match location information of each place with identification information of the external device 10 and store the information, or may match identification information corresponding to location information of each place with identification information of the external device 10 and store the same. Accordingly, the controller 220 may identify a destination set in the user terminal apparatus 100 and the external device 10 in the corresponding destination.

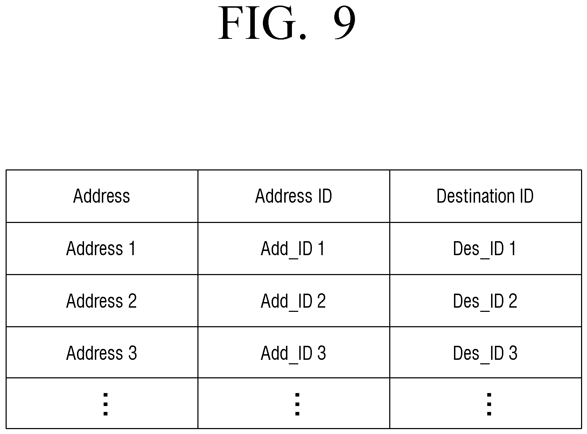

FIG. 9 is a view for explaining information stored in a server according to an exemplary embodiment. As illustrated in FIG. 9, the server 200 may match identification information Address_ID and identification information Destination ID of the external device 10 to location information, i.e., address of each place and store the information. Accordingly, the server 200 may identify a destination set in the user terminal apparatus 100 and the external device 10 in the corresponding destination using the information.

For example, in a case where Add_ID2 is received from the user terminal apparatus 100, the server 200 may determine that Address 2 is set as a destination in the user terminal apparatus 100 by determining location information matched with Add_ID2. In addition, the server 200 may determine that the external device 10 having Des_ID2 is in the destination set in the user terminal apparatus 100.

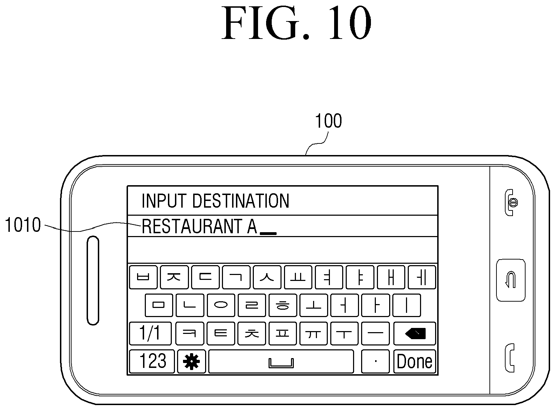

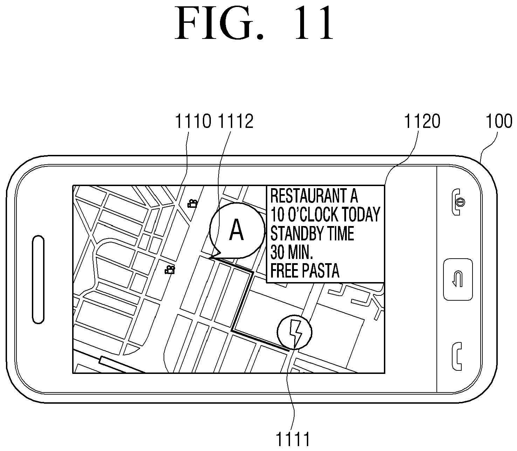

FIGS. 10 and 11 are views illustrating a user interface (Ul) screen provided by a user terminal apparatus according to an exemplary embodiment.

As illustrated in FIG. 10, when a navigation program is executed and a destination is input in the user terminal apparatus 100, a path guidance screen which guides a path to the input destination and information regarding the destination may be displayed as illustrated in FIG. 11.

For example, if a user executes a navigation application program and inputs a destination "restaurant A" 1010 as illustrated in FIG. 10, a navigation map 1110 which guides a path to "restaurant A" and an advertisement message 1120 provided by the "restaurant A" may be displayed as illustrated in FIG. 11.

In this case, a current location 1111 of the user terminal apparatus 100 and the location 1112 of "restaurant A" which is set as the destination may be displayed on the navigation map 1110, and a path to the location 1112 of "restaurant A" from the current location 1111 may be displayed. In addition, the advertisement message 1120 provided by "restaurant A" may be received by the user terminal apparatus 100 through the server 200 which may perform communication with the external device 10 in "restaurant A", and the corresponding information may be transmitted from the external device 10 in "restaurant A" to the server 200. In some cases, the corresponding information may be transmitted directly from the external device 10 in "restaurant A" to the user terminal apparatus 100.

However, the above embodiment is only an example, and information may be provided from the user terminal apparatus 100 in various ways. For example, in a case where "mart B" is set as a destination and an application program which provides the user terminal apparatus 100 with a shopping basket and a wish list service is installed, when "mart B" sells products through the application program installed in the user terminal apparatus 100, information regarding the corresponding products, for example, discount information, coupon information, etc. of the corresponding products may be displayed. In addition, it is possible to provide a reservation service merely by setting a destination. For example, if "hair shop C" is set as a destination, the user terminal apparatus 100 may transmit a reservation request to the external device 10 in "hair shop C" through the server 200, and in this case, the external device 10 in "hair shop C" may transmit information regarding whether it is possible to make a reservation, whether a reservation is confirmed, etc. to the user terminal apparatus 100 through the server 200.

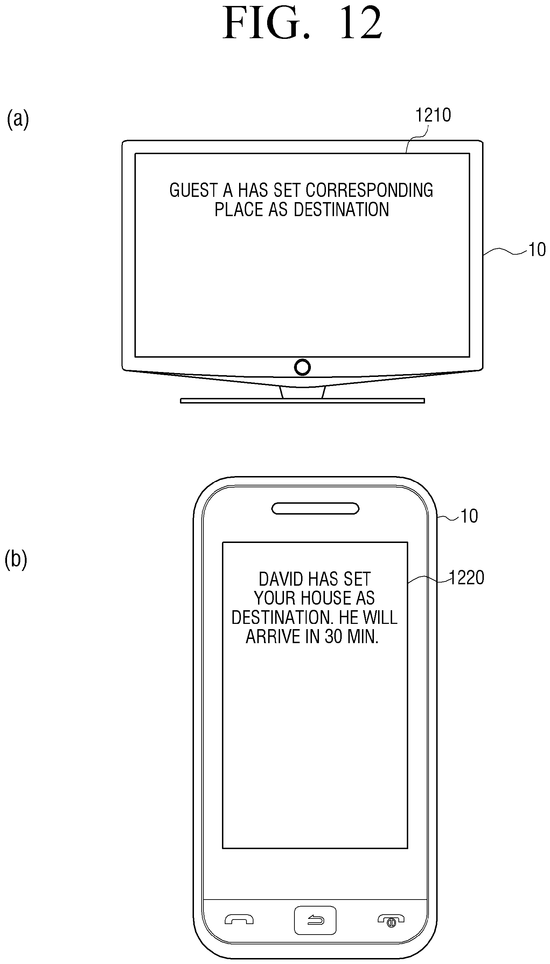

FIG. 12 is a view illustrating a UI screen provided by an external device according to an exemplary embodiment.

As illustrated in (a) and (b) of FIG. 12, various notification messages may be provided to the external device 10 in the place set as the destination in the user terminal apparatus 100.

As illustrated in (a) of FIG. 12, a notification message informing the setting of a destination may be provided to the external device 10 in the place which is set as the destination through a navigation function. For example, a screen 1210 including a notification message, "guest A has set the corresponding place as a destination" may be displayed.

In addition, as illustrated in (b) of FIG. 12, a notification message informing the setting of a destination and the arrival time may be provided to the external device 10 in the place which is set as the destination through the navigation function in the user terminal apparatus 100. In this case, the user terminal apparatus 100 may transmit its current location information to the server 200, and the server 200 may calculate a required time to reach the destination based on the current location information of the user terminal apparatus 100 and transmit the information to the external device in the destination.

Meanwhile, the server 200 may transmit a notification message which includes or does not include the user information of the user terminal apparatus 100 to the external device 10. Accordingly, the user may be displayed as an unspecified person as illustrated in (a) of FIG. 12, or may be displayed as a specified person as illustrated in (b) of FIG. 12.

In addition, whether the user information is displayed or not may depend on whether the information of the user terminal apparatus 100 is pre-registered or not (for example, whether member registration is performed or not). That is, when information of the user terminal apparatus 100 is not registered in the external device 10, a user is displayed as an unspecified person as illustrated in (a) of FIG. 12, and when information of the user terminal apparatus 100 is pre-registered in the external device 10, a user may be displayed as a specified person as illustrated in (b) of FIG. 12.

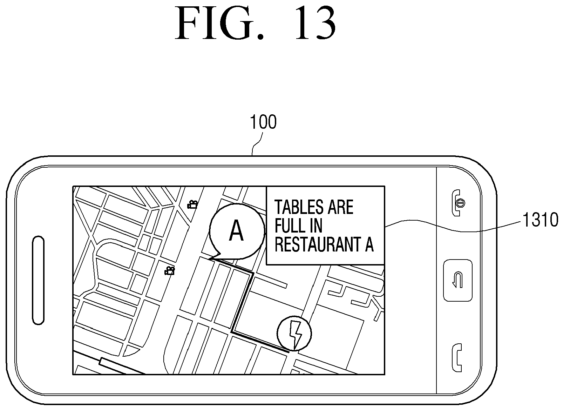

FIG. 13 is a view illustrating a UI screen which is provided by a user terminal apparatus according to an exemplary embodiment.

As illustrated in FIG. 13, the user terminal apparatus 100 may be provided with information which is provided from a place set as a destination in the user terminal apparatus 100 in real time. For example, when a user sets "restaurant A" as a destination as illustrated in FIG. 13, a corresponding notification message may be transmitted to the external device 10 in "restaurant A". In this case, the external device 10 may update information to the server in real time so that the updated information may be provided to the user terminal apparatus 100. However, this is only an example, and a user of the external device 10 may transmit information directly to the user terminal apparatus 100 without passing through the server 200.

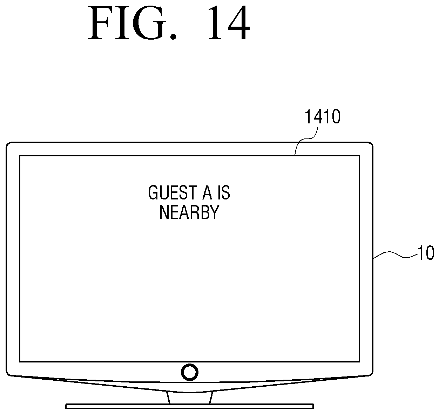

FIG. 14 is a view illustrating a UI screen which is provided by an external device according to an exemplary embodiment.

As illustrated in FIG. 14, information based on the current location of the user terminal apparatus 100 may be provided from the external device 10. For example, when a user sets "restaurant A" as a destination through a navigation function of the user terminal apparatus 100, the user terminal apparatus 100 may transmit its current location to the server 200. In this case, the server 200 may transmit a message, "guest A is nearby" to the external device 10 in "restaurant A" based on the current location of the user terminal apparatus 100.

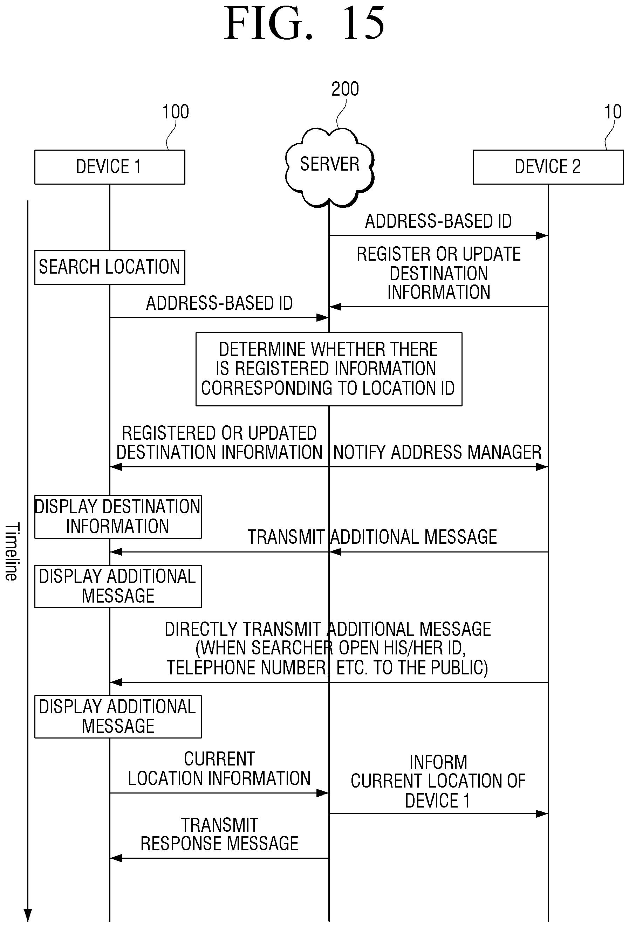

FIG. 15 is a signal flow view illustrating an operation among the user terminal apparatus 100, the server 200, and the external device 10 according to an exemplary embodiment.

According to FIG. 15, the server 200 allocates an address-based ID to the external device 10 in a specific place, and the external device 10 may register information to be displayed when the corresponding place is searched or may update registered information.

When the user terminal apparatus 100 searches the corresponding place through a navigation function or sets the corresponding place as a destination, the user terminal apparatus 100 transmits an address-based ID corresponding to the set destination to the server 200, and the server 200 determines whether there is registered information corresponding to the received address-based ID (or location ID). If it is determined that there is registered information, the server 200 may transmit the registered information regarding the corresponding place to the user terminal apparatus 100 and may transmit a notification message to the external device 10 in the corresponding place.

The user terminal apparatus 100 may display information regarding the corresponding place which is received from the server 200. In addition, when an additional message is received from the external device 10 which receives the notification message, the server 200 may transmit the corresponding additional message to the user terminal apparatus 100, and the user terminal apparatus 100 may display the corresponding additional message.

In addition, in some cases, if the external device 10 has the information (for example, an ID, a telephone number, etc.) of the user terminal apparatus 100, information regarding the corresponding place may be transmitted directly to the user terminal apparatus 100.

Further, when the user terminal apparatus 100 transmits its current location information to the server 200, the server 200 transmits a message regarding the location of the user terminal apparatus 100 to the external device 10 based on the received location information. In addition, the server 200 may transmit a message corresponding to the location information of the user terminal apparatus 200 to the user terminal apparatus 100.

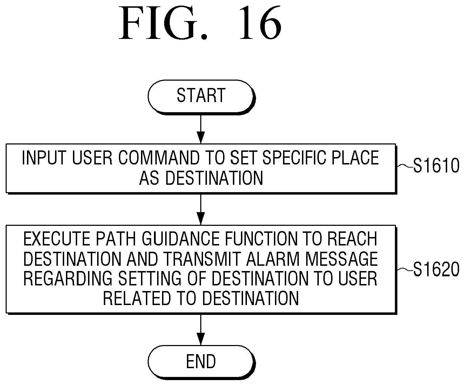

FIG. 16 is a flowchart illustrating a method for controlling a user terminal apparatus according to an exemplary embodiment.

A user command to set a specific place as a destination is input (S1610). Herein, the user command may include at least one of a user command to select user identification information matched with address information pre-stored in the user terminal apparatus 100 and a user command to set a destination on a navigation screen which is displayed in accordance with the execution of a navigation function.

When a user command is input, a path guidance function to reach the set destination is executed, and a notification message regarding the setting of the destination is transmitted to a user related to the destination (S1620). Herein, the notification message may be transmitted to the user matched with the place set as the destination in the form of at least one of, for example, an SMS message, an SNS message, and an e-mail.

Meanwhile, when a user command is input, identification information corresponding to the place set as a destination is transmitted to the server which manages information regarding the place set as the destination through the navigation function, information regarding the place set as the destination is received from the server, and the received information regarding the place set as the destination may be displayed.

Herein, location information representing the location of the user terminal apparatus 100 may be transmitted to the server 200, and a message corresponding to the place set as the destination may be received by the user terminal apparatus 100 through the server 200.

In addition, the information regarding the place set as the destination may include at least one of, for example, advertisement information, reservation service information, detailed information, and current status information regarding the place set as the destination.

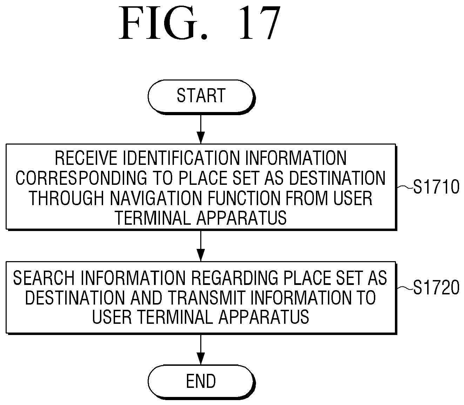

FIG. 17 is a flowchart illustrating a method for controlling a server according to an exemplary embodiment. Herein, the server may perform communication with the user terminal apparatus which provides a navigation function.

First, identification information corresponding to a place set as a destination through a navigation function is received from a user terminal apparatus (S1710).

Next, when identification information is received, information regarding the place set as the destination is searched and transmitted to the user terminal apparatus (S1720).

Specifically, information regarding the place set as the destination may be searched from pre-stored information and information regarding the place set as the destination may be received from an apparatus corresponding to the place set as the destination so that the information may be transmitted to the user terminal apparatus.

In addition, when location information of the user terminal apparatus is received from the user terminal apparatus, at least one of the received location information and a message corresponding to the received location information may be transmitted to an apparatus corresponding to the place set as the destination.

Further, when location information of the user terminal apparatus is received from the user terminal apparatus, the received location information may be transmitted to an apparatus corresponding to the place set as the destination, and a message corresponding to the location information may be received from the apparatus and transmitted to the user terminal apparatus.

Meanwhile, a non-transitory computer readable medium storing a program which performs a controlling method according to an exemplary embodiment sequentially may be provided.

The non-transitory recordable medium refers to a medium which may store data semi-permanently rather than storing data for a short time such as a register, a cache, and a memory and may be readable by an apparatus. Specifically, the above-mentioned various applications or programs may be stored in a non-temporal recordable medium such as a compact disk (CD), a digital video disk (DVD), a hard disk, a Blu-ray disk, a universal serial bus (USB), a memory card, and a ROM.

Although a bus is not illustrated in the above block diagram regarding the user terminal apparatus and the server, communication between each component in the user terminal apparatus and the server may be performed through a bus. In addition, each device may further include processors such as a CPU, a microprocessor, etc., which perform the mentioned above steps.

According to various exemplary embodiments, a user terminal apparatus may transmit a message regarding setting of a destination to a user related to a place set as the destination through a navigation function. Accordingly, the user related to the place set as the destination, e.g., located in the place, may recognize that another person is approaching to the place.

In addition, the user terminal apparatus provides a user with not only the navigation function but also various information regarding the destination set by the user. Accordingly, the user may receive not only path guidance to the destination but also useful information regarding the destination and thus user convenience may be enhanced.

## Claims

1. A user terminal apparatus (100) which provides a navigation function, comprising:
a display (110);
a user interface (120 configured to receive a user command from a user of the user terminal apparatus to set a specific place as a destination; and
a controller (130) configured to, when the user command is input, execute a path guidance function to reach the destination and transmit a notification message regarding setting of the destination to at least one user related to the destination other than the user of the user terminal apparatus
**characterised in that** the user terminal apparatus comprises
a communication unit (140) configured to communicate with a server (200) that manages information regarding the specific place set as the destination through the navigation function,
wherein the controller (130) is configured to, when the user command is input, control the communication unit (140) to transmit identification information corresponding to the specific place set as the destination to the server (200), configured to receive from the server (200) information regarding the specific place set as the destination and configured to control the display to display the information regarding the specific place set as the destination received from the server (200).

2. The apparatus (100) as claimed in claim 1, wherein the user command includes at least one of a user command to select user identification information of the at least one user related to the destination other than the user of the user terminal apparatus matched with address information pre-stored in the user terminal apparatus, a user command to set the destination on a navigation screen which is displayed in accordance with execution of the navigation function, and a user command to select address information linked to a message received by the user terminal apparatus.

3. The apparatus (100) as claimed in claim 1 or 2, wherein the notification message is transmitted to the at least one user related to the destination in a form of at least one of a short message service, SMS, message, a social network service, SNS, message, and an e-mail.

4. The apparatus (100) as claimed in claim 3, wherein the controller (130) is configured to transmit location information representing a location of the user terminal apparatus (100) to the server and receive a message corresponding to this location information from an apparatus (10) corresponding to the specific place set as the destination.

5. The apparatus (100) as claimed in claim 3 or 4, wherein the information regarding the specific place set as the destination received from the server (200) includes at least one of advertisement information, reservation service information, detailed information, and current status information of the specific place set as the destination.

6. A server (200) comprising:
a communication unit (210) configured to perform communication with a user terminal apparatus (100) that provides a navigation function, according to claim 1; and
a controller (220) configured to, when identification information corresponding to a specific place set as a destination through the navigation function is received from the user terminal apparatus (100), control the communication unit (210) to search information regarding the specific place set as the destination and transmit the information to the user terminal apparatus (100).

7. The server (200) as claimed in claim 6, wherein the controller (220) is configured to search information regarding the specific place set as the destination from pre-stored information or receive information regarding the place set as the destination from an apparatus (10) corresponding to the specific place set as the destination and is configured to transmit the searched or received information to the user terminal apparatus (100).

8. The server (200) as claimed in claim 7, wherein the controller (220) is configured to, when location information of the user terminal apparatus (100) is received from the user terminal apparatus (100), transmit at least one of the received location information and a message corresponding to the received location information to the apparatus (10) corresponding to the specific place set as the destination.

9. The server (200) as claimed in claim 7, wherein the controller (220) is configured to, when location information of the user terminal apparatus (100) is received from the user terminal apparatus (100), transmit the received location information to the apparatus (10) corresponding to the specific place set as the destination, receive a message corresponding to the location information from the apparatus (10), and transmit the message to the user terminal apparatus (100).

10. A method for controlling a user terminal apparatus (100) which provides a navigation function, the method comprising:
receiving a user command from a user of the user terminal apparatus (100) to set a specific place as a destination (S1610); and
executing a path guidance function to reach the set destination when the user command is input and transmitting a notification message regarding setting of the destination to at least one user related to the destination other than the user of the user terminal apparatus (100) (S1620);
**characterised by** the method comprising
transmitting identification information corresponding to the specific place set as the destination to a server (200) that manages information regarding the specific place set as the destination through the navigation function, when the user command is input;
receiving information regarding the specific place set as the destination from the server (200); and
displaying the received information regarding the specific place set as the destination from the server.

11. The method as claimed in claim 10, wherein the user command includes at least one of a user command to select user identification information of the at least one user related to the destination other than the user of the user terminal apparatus matched with address information pre-stored in the user terminal apparatus (100), a user command to set a destination on a navigation screen which is displayed in accordance with execution of the navigation function, and a user command to select address information linked to a message received by the user terminal apparatus (100).

12. The method as claimed in claim 10 or 11, wherein the notification message is transmitted to a user matched with the specific place set as the destination in a form of at least one of an SMS message, an SNS message, and an e-mail.

13. A method for controlling a server (200) which performs communication with a user terminal apparatus (100) that provides a navigation function, the method comprising:
receiving identification information corresponding to a specific place set as a destination through the navigation function from the user terminal apparatus (100) (S1710), according to claim 1; and
when the identification information is received, searching information regarding the specific place set as the destination and transmitting the information to the user terminal apparatus (100) (S1720).

## Patentansprüche

1. Benutzerendgerätevorrichtung (100), die eine Navigationsfunktion bereitstellt und Folgendes umfasst:
eine Anzeige (110);
eine Benutzerschnittstelle (120), die dazu ausgelegt ist, von einem Benutzer der Benutzerendgerätevorrichtung einen Benutzerbefehl zu empfangen, um einen speziellen Ort als ein Ziel einzustellen; und
eine Steuerung (130), die dazu ausgelegt ist, wenn der Benutzerbefehl eingegeben wird, eine Pfadführungsfunktion auszuführen, um das Ziel zu erreichen, und eine Benachrichtigungsnachricht bezüglich der Einstellung des Ziels zu mindestens einem anderen Benutzer, der mit dem Ziel verknüpft ist, als dem Benutzer der Benutzerendgerätevorrichtung zu übertragen,
**dadurch gekennzeichnet, dass** die Benutzerendgerätevorrichtung Folgendes umfasst:
eine Kommunikationseinheit (140), die dazu ausgelegt ist, mit einem Server (200), der Informationen bezüglich des speziellen Ortes verwaltet, der über die Navigationsfunktion als das Ziel eingestellt wurde, zu kommunizieren,
wobei die Steuerung (130) dazu ausgelegt ist, wenn der Benutzerbefehl eingegeben wird, die Kommunikationseinheit (140) zu steuern, um Identifikationsinformationen, die dem speziellen Ort entsprechen, der als das Ziel eingestellt wurde, zum Server (200) zu übertragen, dazu ausgelegt, Informationen bezüglich des speziellen Ortes, der als das Ziel eingestellt wurde, vom Server (200) zu empfangen, und dazu ausgelegt, die Anzeige zu steuern, um die Informationen bezüglich des speziellen Ortes, der als das Ziel eingestellt wurde, die vom Server (200) empfangen wurden, anzuzeigen.

2. Vorrichtung (100) nach Anspruch 1, wobei der Benutzerbefehl mindestens einen von einem Benutzerbefehl zum Auswählen von Benutzeridentifikationsinformationen von dem mindestens einen anderen Benutzer, der mit dem Ziel verknüpft ist, als dem Benutzer der Benutzerendgerätevorrichtung, der mit Adressinformationen übereinstimmt, die vorab in der Benutzerendgerätevorrichtung gespeichert wurden, einem Benutzerbefehl zum Einstellen des Ziels auf einem Navigationsbildschirm, der gemäß der Ausführung der Navigationsfunktion angezeigt wird, und einem Benutzerbefehl zum Auswählen von Adressinformationen, die mit einer Nachricht verlinkt sind, die von der Benutzerendgerätevorrichtung empfangen wurde, beinhaltet.

3. Vorrichtung (100) nach Anspruch 1 oder 2, wobei die Benachrichtigungsnachricht in Form von mindestens einer von einer Kurznachrichtendienst(SMS)-Nachricht, einer Sozialnetzwerkdienst(SNS)-Nachricht und einer E-Mail zu dem mindestens einen Benutzer, der mit dem Ziel verknüpft ist, übertragen wird.

4. Vorrichtung (100) nach Anspruch 3, wobei die Steuerung (130) dazu ausgelegt ist, Standortinformationen, die einen Standort der Benutzerendgerätevorrichtung (100) repräsentieren, zum Server zu übertragen und eine Nachricht, die diesen Standortinformationen entspricht, von einer Vorrichtung (10) zu empfangen, die dem speziellen Ort, der als das Ziel eingestellt wurde, entspricht.

5. Vorrichtung (100) nach Anspruch 3 oder 4, wobei die Informationen bezüglich des speziellen Ortes, der als das Ziel eingestellt wurde, die vom Server (200) empfangen wurden, mindestens eines von Werbeinformationen, Reservierungsdienstinformationen, detaillierten Informationen und aktuellen Statusinformationen des speziellen Ortes, der als das Ziel eingestellt wurde, beinhalten.

6. Server (200), der Folgendes umfasst:
eine Kommunikationseinheit (210), die dazu ausgelegt ist, mit einer Benutzerendgerätevorrichtung (100), die eine Navigationsfunktion bereitstellt, gemäß Anspruch 1 eine Kommunikation durchzuführen; und
eine Steuerung (220), die, wenn Identifikationsinformationen, die einem speziellen Ort entsprechen, der über die Navigationsfunktion als ein Ziel eingestellt wurde, von der Benutzerendgerätevorrichtung (100) empfangen werden, dazu ausgelegt ist, die Kommunikationseinheit (210) zu steuern, um Informationen bezüglich des speziellen Ortes, der als das Ziel eingestellt wurde, zu suchen und die Informationen zur Benutzerendgerätevorrichtung (100) zu übertragen.

7. Server (200) nach Anspruch 6, wobei die Steuerung (220) dazu ausgelegt ist, Informationen bezüglich des speziellen Ortes, der als das Ziel eingestellt wurde, in vorab gespeicherten Informationen zu suchen oder Informationen bezüglich des Ortes, der als das Ziel eingestellt wurde, von einer Vorrichtung (10) zu empfangen, die dem speziellen Ort entspricht, der als das Ziel eingestellt wurde, und dazu ausgelegt ist, die gesuchten oder empfangenen Informationen zur Benutzerendgerätevorrichtung (100) zu übertragen.

8. Server (200) nach Anspruch 7, wobei die Steuerung (220) dazu ausgelegt ist, wenn Standortinformationen der Benutzerendgerätevorrichtung (100) von der Benutzerendgerätevorrichtung (100) empfangen werden, mindestens eines der empfangenen Standortinformationen und einer Nachricht, die den empfangenen Standortinformationen entspricht, zur Vorrichtung (10), die dem speziellen Ort entspricht, der als das Ziel eingestellt wurde, zu übertragen.

9. Server (200) nach Anspruch 7, wobei die Steuerung (220) dazu ausgelegt ist, wenn Standortinformationen der Benutzerendgerätevorrichtung (100) von der Benutzerendgerätevorrichtung (100) empfangen werden, die empfangenen Standortinformationen zur Vorrichtung (10), die dem speziellen Ort entspricht, der als das Ziel eingestellt wurde, zu übertragen, eine Nachricht, die den Standortinformationen entspricht, von der Vorrichtung (10) zu empfangen und die Nachricht zur Benutzerendgerätevorrichtung (100) zu übertragen.

10. Verfahren zum Steuern einer Benutzerendgerätevorrichtung (100), die eine Navigationsfunktion bereitstellt, wobei das Verfahren Folgendes umfasst:
Empfangen eines Benutzerbefehls von einem Benutzer der Benutzerendgerätevorrichtung (100), um einen speziellen Ort als ein Ziel einzustellen (S1610); und
Ausführen einer Pfadführungsfunktion, um das eingestellte Ziel zu erreichen, wenn der Benutzerbefehl eingegeben wird, und Übertragen einer Benachrichtigungsnachricht bezüglich der Einstellung des Ziels zu mindestens einem anderen Benutzer, der mit dem Ziel verknüpft ist, als dem Benutzer der Benutzerendgerätevorrichtung (100) (S1620);
**dadurch gekennzeichnet, dass** das Verfahren Folgendes umfasst:
Übertragen von Identifikationsinformationen, die dem speziellen Ort entsprechen, der als das Ziel eingestellt wurde, zu einem Server (200), der Informationen bezüglich des speziellen Ortes verwaltet, der über die Navigationsfunktion als das Ziel eingestellt wurde, wenn der Benutzerbefehl eingegeben wird;
Empfangen von Informationen bezüglich des speziellen Ortes, der als das Ziel eingestellt wurde, vom Server (200) und
Anzeigen der vom Server empfangenen Informationen bezüglich des speziellen Ortes, der als das Ziel eingestellt wurde.

11. Verfahren nach Anspruch 10, wobei der Benutzerbefehl mindestens einen von einem Benutzerbefehl zum Auswählen von Benutzeridentifikationsinformationen von dem mindestens einen anderen Benutzer, der mit dem Ziel verknüpft ist, als dem Benutzer der Benutzerendgerätevorrichtung, der mit Adressinformationen übereinstimmt, die vorab in der Benutzerendgerätevorrichtung (100) gespeichert wurden, einem Benutzerbefehl zum Einstellen eines Ziels auf einem Navigationsbildschirm, der gemäß der Ausführung der Navigationsfunktion angezeigt wird, und einem Benutzerbefehl zum Auswählen von Adressinformationen, die mit einer Nachricht verlinkt sind, die von der Benutzerendgerätevorrichtung (100) empfangen wurde, beinhaltet.

12. Verfahren nach Anspruch 10 oder 11, wobei die Benachrichtigungsnachricht in Form von mindestens einer von einer SMS-Nachricht, einer SNS-Nachricht und einer E-Mail zu einem Benutzer übertragen wird, der mit dem speziellen Ort übereinstimmt, der als das Ziel eingestellt wurde.

13. Verfahren zum Steuern eines Servers (200), der mit einer Benutzerendgerätevorrichtung (100), die eine Navigationsfunktion bereitstellt, eine Kommunikation durchführt, wobei das Verfahren Folgendes umfasst:
Empfangen von Identifikationsinformationen, die einem speziellen Ort entsprechen, der über die Navigationsfunktion als ein Ziel eingestellt wurde, von der Benutzerendgerätevorrichtung (100) (S1710) gemäß Anspruch 1 und
wenn die Identifikationsinformationen empfangen werden, Suchen nach Informationen bezüglich des speziellen Ortes, der als das Ziel eingestellt wurde, und Übertragen der Informationen zur Benutzerendgerätevorrichtung (100) (S1720).

## Revendications

1. Appareil terminal utilisateur (100) qui fournit une fonction de navigation, comprenant :
un écran (110) ;
une interface utilisateur (120) configurée pour recevoir une commande utilisateur à partir d'un utilisateur de l'appareil terminal utilisateur pour fixer un endroit spécifique comme destination ; et
un contrôleur (130) configuré pour, lorsque la commande utilisateur est entrée, exécuter une fonction de guidage d'itinéraire pour atteindre la destination et transmettre un message de notification concernant la fixation de la destination à au moins un utilisateur associé à la destination autre que l'utilisateur de l'appareil terminal utilisateur
**caractérisé en ce que** l'appareil terminal utilisateur comprend
une unité de communication (140) configurée pour communiquer avec un serveur (200) qui gère des informations concernant l'endroit spécifique fixé comme la destination par l'intermédiaire de la fonction de navigation,
le contrôleur (130) étant configuré pour, lorsque la commande utilisateur est entrée, amener l'unité de communication (140) à transmettre des informations d'identification correspondant à l'endroit spécifique fixé comme la destination au serveur (200), configuré pour recevoir à partir du serveur (200) des informations concernant l'endroit spécifique fixé comme la destination et configuré pour amener l'écran à afficher les informations concernant l'endroit spécifique fixé comme la destination reçues à partir du serveur (200).

2. Appareil (100) selon la revendication 1, dans lequel la commande utilisateur comporte au moins un élément parmi une commande utilisateur destinée à sélectionner des informations d'identification utilisateur dudit utilisateur associé à la destination autre que l'utilisateur de l'appareil terminal utilisateur appariées avec des informations d'adresse pré-stockées dans l'appareil terminal utilisateur, une commande utilisateur destinée à fixer la destination sur un écran de navigation qui est affiché en fonction de l'exécution de la fonction de navigation, et une commande utilisateur destinée à sélectionner des informations d'adresse reliées à un message reçu par l'appareil terminal utilisateur.

3. Appareil (100) selon la revendication 1 ou 2, dans lequel le message de notification est transmis au dit utilisateur associé à la destination sous la forme d'au moins un élément parmi un message texte, SMS, un message de service de réseau social, SNS, et un courrier électronique.

4. Appareil (100) selon la revendication 3, dans lequel le contrôleur (130) est configuré pour transmettre des informations d'emplacement représentant un emplacement de l'appareil terminal utilisateur (100) au serveur et recevoir un message correspondant à ces informations d'emplacement à partir d'un appareil (10) correspondant à l'endroit spécifique fixé comme la destination.

5. Appareil (100) selon la revendication 3 ou 4, dans lequel les informations concernant l'endroit spécifique fixé comme la destination reçues à partir du serveur (200) comprennent au moins un élément parmi des informations publicitaires, des informations de service de réservation, des informations détaillées, et des informations d'état courantes de l'endroit spécifique fixé comme la destination.

6. Serveur (200) comprenant :
une unité de communication (210) configurée pour exécuter une communication avec un appareil terminal utilisateur (100) qui fournit une fonction de navigation, selon la revendication 1 ; et
un contrôleur (220) configuré pour, lorsque des informations d'identification correspondant à un endroit spécifique fixé comme destination par l'intermédiaire de la fonction de navigation sont reçues à partir de l'appareil terminal utilisateur (100), amener l'unité de communication (210) à rechercher des informations concernant l'endroit spécifique fixé comme la destination et transmettre les informations à l'appareil terminal utilisateur (100).

7. Serveur (200) selon la revendication 6, dans lequel le contrôleur (220) est configuré pour rechercher des informations concernant l'endroit spécifique fixé comme la destination à partir d'informations pré-stockées ou recevoir des informations concernant l'endroit fixé comme la destination à partir d'un appareil (10) correspondant à l'endroit spécifique fixé comme la destination et est configuré pour transmettre les informations recherchées ou reçues à l'appareil terminal utilisateur (100).

8. Serveur (200) selon la revendication 7, dans lequel le contrôleur (220) est configuré pour, lorsque des informations d'emplacement de l'appareil terminal utilisateur (100) sont reçues à partir de l'appareil terminal utilisateur (100), transmettre au moins un élément parmi les informations d'emplacement reçues et un message correspondant aux informations d'emplacement reçues à l'appareil (10) correspondant à l'endroit spécifique fixé comme la destination.

9. Serveur (200) selon la revendication 7, dans lequel le contrôleur (220) est configuré pour, lorsque des informations d'emplacement de l'appareil terminal utilisateur (100) sont reçues à partir de l'appareil terminal utilisateur (100), transmettre les informations d'emplacement reçues à l'appareil (10) correspondant à l'endroit spécifique fixé comme la destination, recevoir un message correspondant aux informations d'emplacement à partir de l'appareil (10), et transmettre le message à l'appareil terminal utilisateur (100).

10. Procédé permettant de contrôler un appareil terminal utilisateur (100) qui fournit une fonction de navigation, le procédé comprenant :
recevoir une commande utilisateur à partir d'un utilisateur de l'appareil terminal utilisateur (100) pour fixer un endroit spécifique comme destination (S1610) ; et
exécuter une fonction de guidage d'itinéraire pour atteindre la destination fixée lorsque la commande utilisateur est entrée et transmettre un message de notification concernant la fixation de la destination à au moins un utilisateur associé à la destination autre que l'utilisateur de l'appareil terminal utilisateur (100) (S1620) ;
**caractérisé en ce que** le procédé comprend
transmettre des informations d'identification correspondant à l'endroit spécifique fixé comme la destination à un serveur (200) qui gère des informations concernant l'endroit spécifique fixé comme la destination par l'intermédiaire de la fonction de navigation, lorsque la commande utilisateur est entrée ;
recevoir des informations concernant l'endroit spécifique fixé comme la destination à partir du serveur (200) ; et
afficher les informations reçues concernant l'endroit spécifique fixé comme la destination à partir du serveur.

11. Procédé selon la revendication 10, dans lequel la commande utilisateur comporte au moins un élément parmi une commande utilisateur destinée à sélectionner des informations d'identification utilisateur dudit utilisateur associé à la destination autre que l'utilisateur de l'appareil terminal utilisateur appariées avec des informations d'adresse pré-stockées dans l'appareil terminal utilisateur (100), une commande utilisateur destinée à fixer une destination sur un écran de navigation qui est affiché en fonction de l'exécution de la fonction de navigation, et une commande utilisateur destinée à sélectionner des informations d'adresse reliées à un message reçu par l'appareil terminal utilisateur (100).

12. Procédé selon la revendication 10 ou 11, dans lequel le message de notification est transmis à un utilisateur associé à l'endroit spécifique fixé comme la destination sous la forme d'au moins un élément parmi un message SMS, un message SNS, et un courrier électronique.

13. Procédé permettant de contrôler un serveur (200) qui exécute une communication avec un appareil terminal utilisateur (100) qui fournit une fonction de navigation, le procédé comprenant :
recevoir des informations d'identification correspondant à un endroit spécifique fixé comme une destination par l'intermédiaire de la fonction de navigation à partir de l'appareil terminal utilisateur (100) (S1710), selon la revendication 1 ; et
lorsque les informations d'identification sont reçues, rechercher des informations concernant l'endroit spécifique fixé comme la destination et transmettre les informations à l'appareil terminal utilisateur (100) (S1720).
